# EUROPEAN PATENT APPLICATION

(11) **EP 4 306 391 A1**
(43) Date of publication of application: **17.01.2024**
(21) Application number: 22184505.0
(22) Date of filing: 12.07.2022
(51) Int. Cl.: B62D 33/04

(54) **A BOX-SHAPED CARGO CARRYING SPACE ENCLOSURE AND A METHOD OF MANUFACTURING IT**

(71) Applicant: Karhof Groep B.V., 1446 TP Purmerend (NL)
(72) Inventor: Visser, Tim, 1066 NJ Amsterdam (NL); Buschgens, Jacobus Cornelis, 3704 JB Zeist (NL); Schaap, Foeke Jasper, 3561 GD Utrecht (NL)
(74) Representative: De Vries & Metman

(57) **Abstract**

In a method of manufacturing a box-shaped cargo carrying space enclosure (1) at least five modules are supplied and interconnected such that they form a roof (2), a bottom (3) and at least three side units (4, 5, 6) between the roof (2) and the bottom (3) in an interconnected condition. In the interconnected condition at least a first one and a second one of the modules (3, 5) are interconnected through a first joining member including a male part (5a) and a second joining member including a female part (3a). The first and second joining members (5a, 3a) are adapted such that the male part (5a) and the female part (3a) can be inserted into each other at a first mutual angle of the first and second joining members and subsequently rotated with respect to each other about a common pivot axis (PA) to a second mutual angle of the first and second joining members where they are locked with respect to each other in radial direction of the common pivot axis (PA). The method comprises the step of inserting the male part (5a) and the female part (3a) into each other at the first mutual angle and then rotate them with respect to each other about the common pivot axis (PA) to the second mutual angle. The first and second joining members are part of the first one and the second one of the modules (3, 5), respectively, before inserting the male part (5a) and the female part (3a) into each other at the first mutual angle of the first and second joining members.

## Description

The present invention relates to a method of manufacturing a box-shaped cargo carrying space enclosure by supplying and interconnecting at least five modules such that they form a roof, a bottom and at least three side units between the roof and the bottom in an interconnected condition, in which condition at least a first one and a second one of the modules are interconnected through a first joining member including a male part and a second joining member including a female part, which first and second joining members are adapted such that the male part and the female part can be inserted into each other at a first mutual angle of the first and second joining members and subsequently rotated with respect to each other about a common pivot axis to a second mutual angle of the first and second joining members where they are locked with respect to each other in radial direction of the common pivot axis, wherein the method comprises the step of inserting the male part and the female part into each other at the first mutual angle and then rotate them with respect to each other about the common pivot axis to the second mutual angle.

Such a method of manufacturing is known from US 5,588,693. A disadvantage of the known method is that it requires a large number of actions to manufacture the cargo carrying space enclosure.

An object of the invention is to provide an improved method of manufacturing a box-shaped cargo carrying space enclosure in order to minimize labour costs.

This object is accomplished with the method according to the invention which is characterized in that the first and second joining members are part of the first one and the second one of the modules, respectively, before inserting the male part and the female part into each other at the first mutual angle of the first and second joining members.

Since the first and second joining members are already part of the first one and the second one of the modules before inserting the male part and the female part into each other at the first mutual angle of the first and second joining members the first one and the second one of the modules can be interconnected quickly. Fixing the first one and the second one of the modules to each other by using fasteners, such as rivets and screws, by welding or by adhesives may be omitted. After manufacturing the cargo carrying space enclosure it may be mounted on a vehicle.

In the interconnected condition the first one and the second one of the modules may be perpendicular to each other. The roof and bottom may extend in parallel horizontal planes and two of the side units may extend in parallel vertical planes. The modules may comprise lightweight panels, made of lightweight metal, sandwich panels, plastic composite panels or the like. The side units may comprise doors, roller shutters, or the like.

In a preferred embodiment, at the second mutual angle the first one and the second one of the modules are locked with respect to each other in a rotational direction about the common pivot axis from the first to the second mutual angle by a contact location between the first one and the second one of the modules which is located between the common pivot axis and an inner side of the cargo carrying space enclosure, since this does not require an additional lock in addition to the first one and the second one of the modules themselves. For example, the contact location may be formed between a surface in the main plane of the second one of the modules and a side edge of the first one of the modules, which extends perpendicularly to the main plane of the first one of the modules.

After reaching the second mutual angle a retaining element may be mounted to the first one and the second one of the modules so as to lock them with respect to each other in a rotational direction about the common pivot axis from the second to the first mutual angle.

The retaining element may be placed into a space between the first one and the second one of the modules beyond the common pivot axis as seen from an inner side of the cargo carrying space enclosure. This means that the first one and the second one of the modules cannot rotate with respect to each other in the rotational direction about the common pivot axis from the second to the first mutual angle.

In an embodiment, at least a third one and a fourth one of the modules are connected to the first one of the modules in a similar way as the second one of the modules is connected to the first one of the modules. The second one, the third one and the fourth one of the modules may form the side units of the cargo carrying space enclosure.

Preferably, the second one and the third one of the modules are connected to opposite side edges of the first one of the modules, whereas the fourth one of the modules is connected to the second and third one of the modules through snap fittings, since this allows to assembly the modules quickly.

A fifth one of the modules may be connected to the second one, the third one and the fourth one of the modules through snap fittings.

In a particular embodiment a sixth one of the modules is connected to the first one of the modules in a similar way as the second one of the modules is connected to the first one of the modules, and to the second one, the third one and the fifth one of the modules through snap fittings.

In the interconnected condition the bottom may be formed by the first one of the modules, the roof may be formed by the fifth one of the modules and the at least three side units may be formed by the second one, the third one and the fourth one of the modules, respectively.

The invention is also related to a box-shaped cargo carrying space enclosure, comprising at least five modules for forming a roof, a bottom and at least three side units between the roof and the bottom, wherein at least a first one and a second one of the modules are interconnected through a first joining member including a male part and a second joining member including a female part, which first and second joining members are adapted such that the male part and the female part can be inserted into each other at a first mutual angle of the first and second joining members and subsequently rotated with respect to each other about a common pivot axis to a second mutual angle of the first and second joining members where they are locked with respect to each other in radial direction of the common pivot axis, wherein at the second mutual angle the first one and the second one of the modules are locked with respect to each other in a rotational direction about the common pivot axis from the first to the second mutual angle by a contact location between the first one and the second one of the modules which is located between the common pivot axis and an inner side of the cargo carrying space enclosure and/or wherein at the second mutual angle the first one and the second one of the modules are locked with respect to each other in a rotational direction about the pivot axis from the second mutual angle to the first mutual angle by a retaining element which is mounted to the first one and the second one of the modules.

The retaining element may be placed in a space between the first one and the second one of the modules beyond the common pivot axis as seen from an inner side of the cargo carrying space enclosure.

In an embodiment, at least a third one and a fourth one of the modules are connected to the first one of the modules in a similar way as the second one of the modules is connected to the first one of the modules and wherein the second one and the third one of the modules are connected to opposite side edges of the first one of the modules, whereas the fourth one of the modules is connected to the second and third one of the modules through snap fittings.

A fifth one of the modules may be connected to the second one, the third one and the fourth one of the modules through snap fittings.

A sixth one of the modules may be connected to the first one of the modules in a similar way as the second one of the modules is connected to the first one of the modules, and to the second one, the third one and the fifth one of the modules through snap fittings.

The first and second joining members may be formed by elongate profiles along respective side edges of the first and second one of the modules.

The invention will hereafter be elucidated with reference to very schematic drawings showing an embodiment of the invention by way of example.
Fig. 1 is a perspective view of an embodiment of a box-shaped cargo carrying space enclosure according to the invention.
Fig. 2 is a cut-away view of the cargo carrying space enclosure as shown in Fig. 1 on a smaller scale.
Fig. 3 is a rear view of a part of the cargo carrying space enclosure as shown in Fig. 2.
Figs. 4-7 are detailed views of the cargo carrying space enclosure as indicated by IV-VII, respectively, in Figs. 2 and 3.
Fig. 8 is an illustrative view of an embodiment of a method of manufacturing a box-shaped cargo carrying space enclosure according to the invention.
Fig. 9 is an illustrative view of successive steps in the method of manufacturing to form a part of the cargo carrying space enclosure as shown Fig. 7.
Fig. 10 is an illustrative view of successive steps in the method of manufacturing to form a part of the cargo carrying space enclosure as shown Fig. 6.

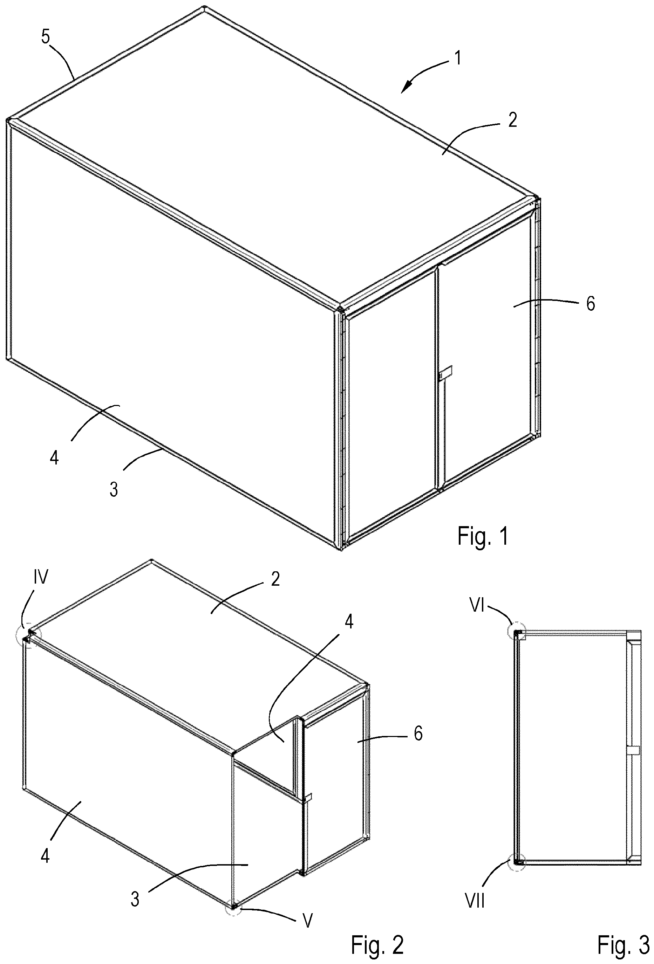

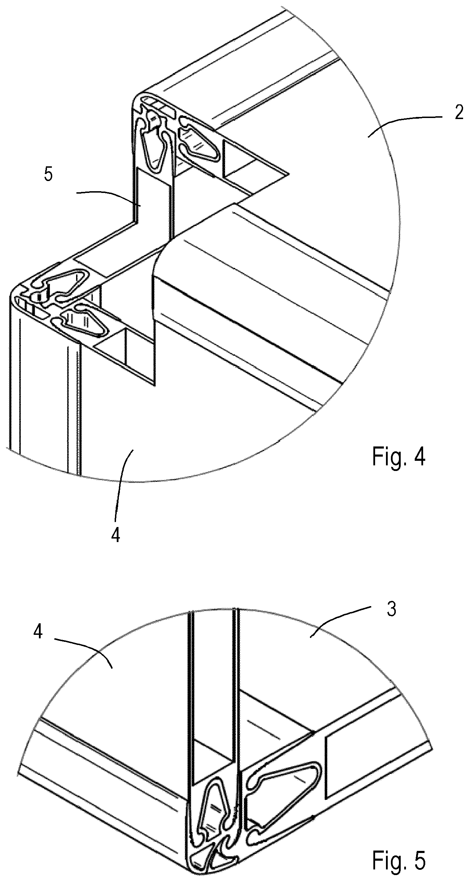

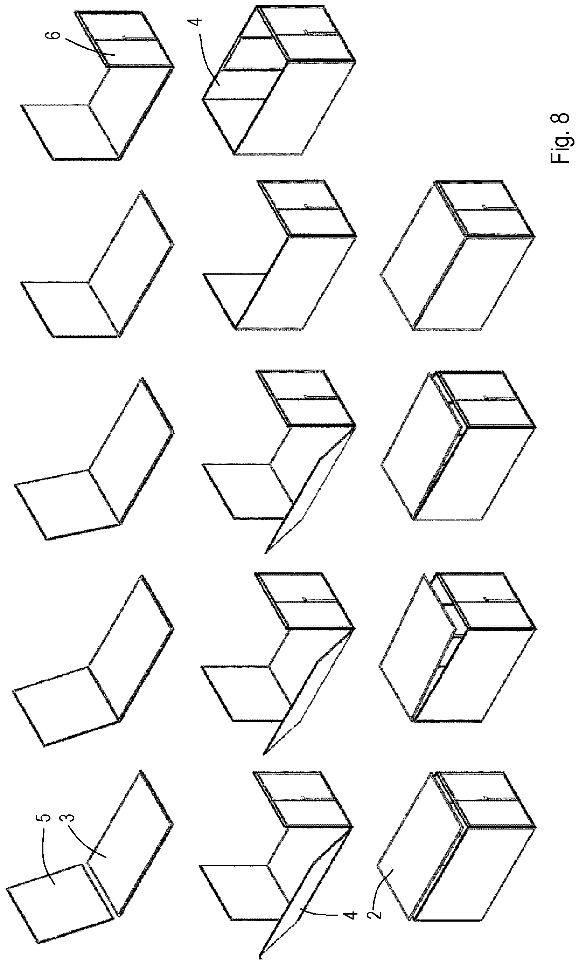

Fig. 1 shows an embodiment of a box-shaped cargo carrying space enclosure 1 according to the invention. The cargo carrying space enclosure 1 is intended to be mounted on a chassis of a truck (not shown). Fig. 2 shows a cut-away view of the cargo carrying space enclosure 1 and Fig. 3 shows a rear view thereof. The cargo carrying space enclosure 1 comprises an assembly of six modules including a roof 2, a bottom 3, two opposite side panels 4, a front panel 5 and a back side 6. In this case the roof 2, the bottom 3, the side panels 4 and the front panel 4 are plate shaped, whereas the back side 6 is formed by a unit including two doors. One of the side panels 4 is also provided with a door. Numerous alternative configurations of the side panels 4, the front panel 5 and the rear side 6 are conceivable. The side panels 4, the front panel 5 and the back side 6 extend between the roof 2 and the bottom 3. Fig. 1 shows the side panels 4, the front panel 5, the back side 6, the roof 2 and the bottom 3 in an interconnected condition and Figs. 4-10 show in detail how they are interconnected. Fig. 8 illustrates an embodiment of the method of manufacturing the cargo carrying space enclosure 1 according to the invention.

Referring to Fig. 8, the side panels 4, the front panel 5 and the rear side 6 are connected to the bottom 3 in a similar way. In this case the front panel 5 is connected to the bottom 3 first, then the rear side 6 is connected to the bottom 3 and subsequently the side panels 4 are connected to the bottom 3 and to the front panel 5 and the rear side 6. Finally, the roof 2 is connected to the side panels 4, the front panel 5 and the rear side 6.

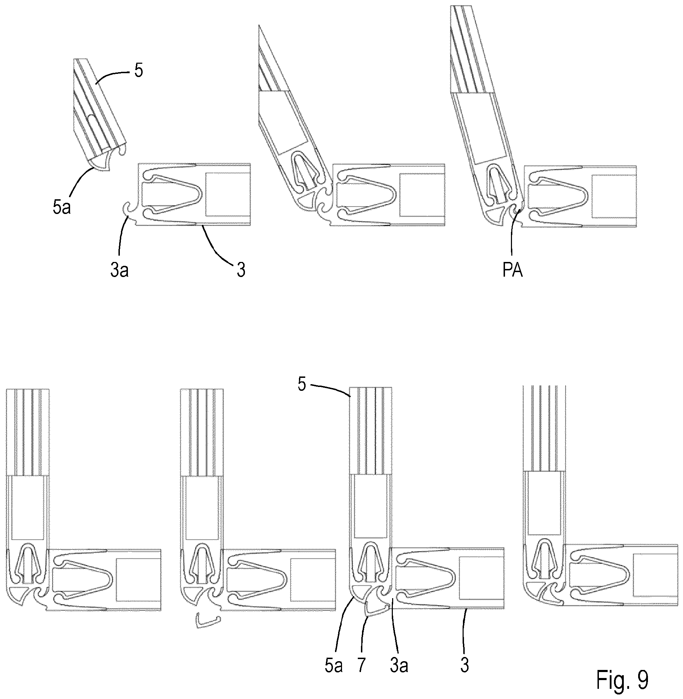

Fig. 9 shows that a side edge of the front panel 5 has a first joining member including a male part 5a and a side edge of the bottom 3 has a second joining member including a female part 3a, which cooperate with respect to each other in order to interconnect the front panel 5 and the bottom 3 through the first and second joining members. The male part 5a and the female part 3a are adapted such that they can be inserted into each other at a first mutual angle of the first and second joining members and locked to each other by subsequently rotating them with respect to each other about a common pivot axis PA to a second mutual angle of the first and second joining members. This is illustrated in Fig. 9. For this reason the male part 5a and the female part 3a comprise hooks which engage each other upon rotating the bottom 3 and the front panel 5 with respect to each other. The male part 5a and the female part 3a are part of the front panel 5 and the bottom 3, respectively, before the bottom 3 and the front panel 5 are interconnected. The male part 5a and the female part 3a may be elongate profiles which are fixed to the remainder of the bottom 3 and the front panel 5, respectively. In that case the elongate profiles may be made of extruded material, for example extruded aluminium. Alternatively, the male part 5a and the female part 3a may be made in one piece with the bottom 3 and the front panel 5, respectively.

Fig. 9 shows that in the interconnected condition the bottom 3 and the front panel 5 are locked with respect to each other in a rotational direction about the common pivot axis PA from the first to the second mutual angle, i.e. clockwise in Fig. 9, by a contact surface between the bottom 3 and the front panel 5. The contact surface is formed by an inner side of the front panel 5 and a short side of the bottom 3 and extends between the pivot axis PA and an inner side of the cargo carrying space enclosure 1. In the interconnected condition the bottom 3 and the front panel 5 extend perpendicularly with respect to each other.

In the interconnected condition the bottom 3 and the front panel 5 are also locked with respect to each other in a rotational direction about the common pivot axis PA from the second to the first mutual angle, i.e. anti-clockwise in Fig. 9. This is caused by a retaining element in the form of an insert 7 which is inserted into a corresponding space between the bottom 3 and the front panel 5. The space is located beyond the pivot axis PA as seen from the inner side of the cargo carrying space enclosure 1.

The rear side 6 is connected to the bottom 3 in the same way as the front panel 5 is connected to the bottom 3, see Fig. 8. Subsequently, the side panels 4 are connected to the bottom 3. Each of the side panels 4 has a side edge including a male part which is the same as the male part 5a of the front panel 5, whereas respective side edges of the bottom 3 to which the side edges of the side panels 4 must be connected have respective female parts which are the same as the female part 3a of the bottom 3 as described above and shown in Fig. 9. The male parts and the female parts of the side panels 4 and the bottom 3 are inserted into each other at a first mutual angle of the side panels 4 and the bottom 3, after which the side panels are tilted with respect to the bottom 3 about corresponding pivot axes to a second mutual angle in which the side panels 4 extend parallel to each other and perpendicularly with respect to the bottom 3, the front panel 5 and the rear side 6. This is illustrated in the second row of pictures in Fig. 8. During a last phase of the tilting movement of the side panels 4 with respect to the bottom 3 the side panels 4 will contact the front panel 5 and the rear side 6. Side edges of the side panels 4, the front panel 5 and the rear side 6 which contact each other are provided with snap fittings in order to facilitate fixing.

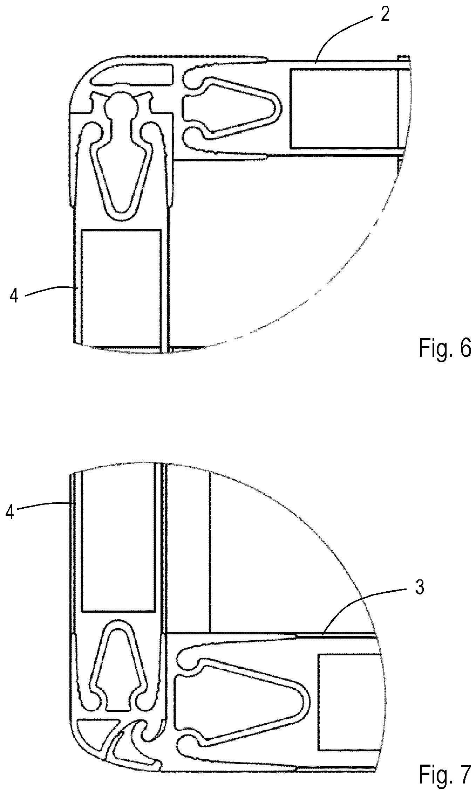

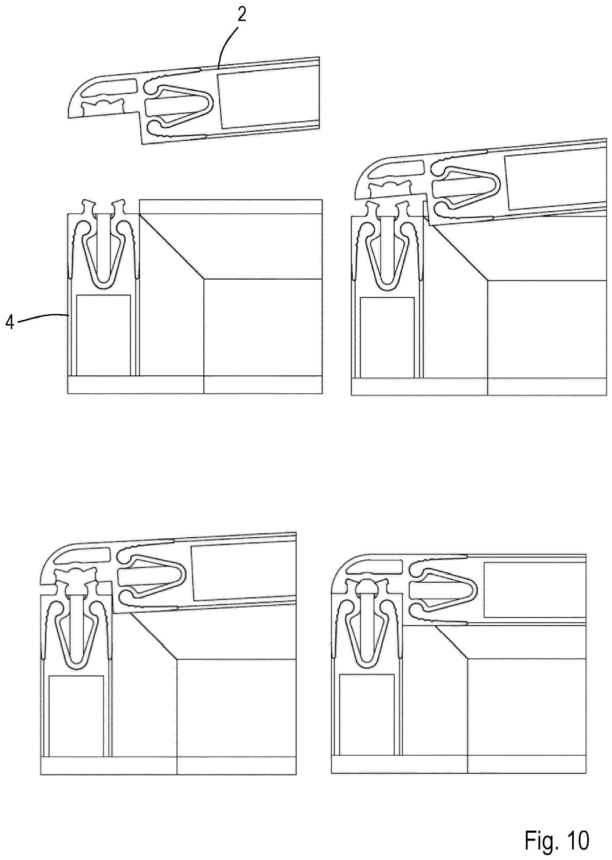

In a next step the roof 2 is mounted to the side panels 4, the front panel 5 and the rear side 6. This is illustrated in the third row of Fig. 8 and Fig. 10. Side edges of the roof 2 and cooperating side edges of the side panels 4, the front panel 5 and the rear side 6 are provided with snap fittings in order to facilitate fixing. Fig. 6 shows the connection between the roof 2 and one of the side panels 4 and Fig. 4 shows the connection between the side panel 4, the front panel 5 and the roof 2 in the interconnected condition. Figs. 5 and 7 show the connection between the bottom 3 and one of the side panels 4.

The invention is not limited to the embodiment shown in the drawings and described hereinbefore, which may be varied in different manners within the scope of the claims and their technical equivalents. For example, the sequence of assembling the separate modules may be performed differently.

## Claims

1. A method of manufacturing a box-shaped cargo carrying space enclosure (1) by supplying and interconnecting at least five modules such that they form a roof (2), a bottom (3) and at least three side units (4, 5, 6) between the roof (2) and the bottom (3) in an interconnected condition, in which condition at least a first one and a second one of the modules (3, 5) are interconnected through a first joining member including a male part (5a) and a second joining member including a female part (3a), which first and second joining members (5a, 3a) are adapted such that the male part (5a) and the female part (3a) can be inserted into each other at a first mutual angle of the first and second joining members and subsequently rotated with respect to each other about a common pivot axis (PA) to a second mutual angle of the first and second joining members where they are locked with respect to each other in radial direction of the common pivot axis (PA), wherein the method comprises the step of inserting the male part (5a) and the female part (3a) into each other at the first mutual angle and then rotate them with respect to each other about the common pivot axis (PA) to the second mutual angle, **characterized in that** the first and second joining members are part of the first one and the second one of the modules (3, 5), respectively, before inserting the male part (5a) and the female part (3a) into each other at the first mutual angle of the first and second joining members.

2. A method according to claim 1, wherein at the second mutual angle the first one and the second one of the modules (3, 5) are locked with respect to each other in a rotational direction about the common pivot axis (PA) from the first to the second mutual angle by a contact location between the first one and the second one of the modules (3, 5) which is located between the common pivot axis (PA) and an inner side of the cargo carrying space enclosure (1).

3. A method according to claim 1 or 2, wherein after reaching the second mutual angle a retaining element (7) is mounted to the first one and the second one of the modules (3, 5) so as to lock them with respect to each other in a rotational direction about the common pivot axis (PA) from the second to the first mutual angle.

4. A method according to claim 3, wherein the retaining element (7) is placed into a space between the first one and the second one of the modules (3, 5) beyond the common pivot axis (PA) as seen from an inner side of the cargo carrying space enclosure (1).

5. A method according to any one of the preceding claims, wherein at least a third one and a fourth one of the modules (4, 5, 6) are connected to the first one of the modules (3) in a similar way as the second one of the modules (4) is connected to the first one of the modules (3).

6. A method according to claim 5, wherein the second one and the third one of the modules (4) are connected to opposite side edges of the first one of the modules (3), whereas the fourth one of the modules (5, 6) is connected to the second and third one of the modules (4) through snap fittings.

7. A method according to claim 6, wherein a fifth one of the modules (2) is connected to the second one, the third one and the fourth one of the modules (4, 5, 6) through snap fittings.

8. A method according to claim 7, wherein a sixth one of the modules is connected to the first one of the modules (3) in a similar way as the second one of the modules (4) is connected to the first one of the modules, and to the second one, the third one and the fifth one of the modules (4, 2) through snap fittings.

9. A method according to any one of the preceding claims, wherein in the interconnected condition the bottom (3) is formed by the first one of the modules, the roof (2) is formed by the fifth one of the modules and the at least three side units (4, 5, 6) are formed by the second one, the third one and the fourth one of the modules, respectively.

10. A box-shaped cargo carrying space enclosure (1), comprising at least five modules for forming a roof (2), a bottom (3) and at least three side units (4, 5, 6) between the roof (2) and the bottom (3), wherein at least a first one and a second one of the modules (3, 5) are interconnected through a first joining member including a male part (5a) and a second joining member including a female part (3a), which first and second joining members are adapted such that the male part (5a) and the female part (3a) can be inserted into each other at a first mutual angle of the first and second joining members and subsequently rotated with respect to each other about a common pivot axis (PA) to a second mutual angle of the first and second joining members where they are locked with respect to each other in radial direction of the common pivot axis (PA), wherein at the second mutual angle the first one and the second one of the modules (3, 5) are locked with respect to each other in a rotational direction about the common pivot axis (PA) from the first to the second mutual angle by a contact location between the first one and the second one of the modules (3, 5) which is located between the common pivot axis (PA) and an inner side of the cargo carrying space enclosure (1) and/or wherein at the second mutual angle the first one and the second one of the modules (3, 5) are locked with respect to each other in a rotational direction about the pivot axis (PA) from the second mutual angle to the first mutual angle by a retaining element (7) which is mounted to the first one and the second one of the modules (3, 5).

11. A box-shaped cargo carrying space enclosure (1) according to claim 10, wherein the retaining element (7) is placed in a space between the first one and the second one of the modules (3, 5) beyond the common pivot axis (PA) as seen from an inner side of the cargo carrying space enclosure (1).

12. A box-shaped cargo carrying space enclosure (1) according to claim 10 or 11, wherein at least a third one and a fourth one of the modules (4, 5, 6) are connected to the first one of the modules (3) in a similar way as the second one of the modules (4) is connected to the first one of the modules (3) and wherein the second one and the third one of the modules (4) are connected to opposite side edges of the first one of the modules (3), whereas the fourth one of the modules (5, 6) is connected to the second and third one of the modules (4) through snap fittings.

13. A box-shaped cargo carrying space enclosure (1) according to claim 12, wherein a fifth one of the modules (2) is connected to the second one, the third one and the fourth one of the modules (4, 5, 6) through snap fittings.

14. A box-shaped cargo carrying space enclosure (1) according to claim 13, wherein a sixth one of the modules (6) is connected to the first one of the modules (3) in a similar way as the second one of the modules (4) is connected to the first one of the modules (4), and to the second one, the third one and the fifth one of the modules (4, 2) through snap fittings.

15. A box-shaped cargo carrying space enclosure according to any one of the claims 10-14, wherein the bottom (3) is formed by the first one of the modules, the roof (2) is formed by the fifth one of the modules and the at least three side units (4, 5, 6) are formed by the second one, the third one and the fourth one of the modules, respectively.
